# EUROPÄISCHE PATENTSCHRIFT

(11) **EP 2 531 361 B1**
(45) Veröffentlichungstag und Bekanntmachung des Hinweises auf die Patenterteilung: **16.01.2019**
(21) Anmeldenummer: 10778587.5
(22) Anmeldetag: 21.10.2010
(51) Int. Cl.: B60C 11/12

(54) **FAHRZEUGLUFTREIFEN**
PNEUMATIC TIRE
PNEU

(30) Priorität: 01.02.2010 DE 102010000272
(43) Veröffentlichungstag der Anmeldung: 12.12.2012
(73) Patentinhaber: Continental Reifen Deutschland GmbH, 30165 Hannover (DE)
(72) Erfinder: SENG, Matthias, 30449 Hannover (DE); SCHLITTENHARD, Jan, 30900 Wedemark (DE); DIENSTHUBER, Franz, 30559 Hannover (DE)
(74) Vertreter: Finger, Karsten
(86) Internationale Anmeldenummer: PCT/EP2010/065845
(87) Internationale Veröffentlichungsnummer: WO 2011/091870

(56) Entgegenhaltungen:
- WO-A1-2007/145603
- WO-A1-2008/065947
- WO-A1-2010/132052
- WO-A2-02/38399
- JP-A- 10 080 923
- JP-A- 2002 187 412
- US-A1- 2007 295 434

## Beschreibung

### Fahrzeugluftreifen

Die Erfindung betrifft einen Fahrzeugluftreifen, insbesondere für den Einsatz unter winterlichen Fahrbedingungen, mit einem Laufstreifen mit durch in Umfangsrichtung umlaufende Nuten, durch Quernuten und dergleichen voneinander getrennten Profilpositiven, beispielsweise Profilblöcken oder Laufstreifenbändern, welche jeweils mit einer Vielzahl von zumindest im Wesentlichen parallel zueinander und zumindest im Wesentlichen in Laufstreifenquerrichtung verlaufenden Einschnitten geringer Breite versehen sind, deren einander gegenüberliegende Einschnittwände miteinander korrespondierende Vorsprünge und Vertiefungen aufweisen mit abgeflachten in radialer Richtung und im Wesentlichen senkrecht zur Einschnittwand orientierten Seiten und mit abgeflachten im Wesentlichen parallel zur Profilpositivoberfläche orientierten Seiten.

Ein Fahrzeugluftreifen der eingangs genannten Art ist beispielsweise aus der WO 2007/145603 bekannt. Der Laufstreifen dieses Reifens weist sogenannte 3D-Einschnitte auf, wobei die Einschnittwände einen radial äußeren Abschnitt mit einer Wellenform aufweisen, im radial inneren Bereich der Einschnittwände sind einerseits Vorsprünge im Bereich der Wellentäler positioniert und andererseits Vorsprünge radial innerhalb der Wellenberge des äußeren Abschnittes, sodass zwei Reihen von Vorsprüngen gebildet sind, die in axialer Richtung gegeneinander versetzt sind. Die WO 02/38399 A2 offenbart einen Fahrzeugluftreifen mit einem Laufstreifen mit Einschnitten, die in radialer Richtung, also in den Laufstreifen hinein, in Zickzackform verlaufen. An den zickzackförmig verlaufenden Abschnitt der Einschnitte schließen Hohlräume an, die, wenn der Laufstreifen auf seine gesamte Profiltiefe abgefahren ist, zusätzlich Rillen zur Verfügung stellen.

gegenüberliegende Einschnittwände miteinander korrespondierende Vorsprünge und Vertiefungen aufweisen. In radialer Richtung betrachtet ist in jeder Einschnittwand jeweils eine Anzahl von paarweise angeordneten Vertiefungen und Vorsprüngen vorgesehen, derart, dass jeweils eine Vertiefung radial außerhalb eines Vorsprunges oder ein Vorsprung radial außerhalb einer Vertiefung angeordnet ist. Durch diese Ausgestaltung sollen die Performance des Reifens auf Eis und Schnee verbessert und unregelmäßiger Abrieb verhindert werden. Aus der US 2007/0295434 A1 ist ein Fahrzeugreifen mit einem Laufstreifen mit Schulterblockreihen bekannt, wobei in jedem Schulterblock, in Draufsicht betrachtet, zwei einander kreuzende Einschnitte ausgebildet sind, von welchen der eine im Wesentlichen in Umfangsrichtung und der andere in Querrichtung verläuft. Beide Einschnitte besitzen an den einander gegenüberliegenden Einschnittwänden miteinander korrespondierende Vorsprünge oder Vertiefungen. Durch diese Maßnahme soll die Steifigkeit der Profilblöcke derart beeinflusst werden, dass die Bremseigenschaften und die Performance des Reifens auf nassen Fahrbahnen gleichermaßen verbessert werden. Die WO 2008/065947 A1 offenbart einen Fahrzeugluftreifen für den Einsatz unter winterlichen Fahrbedingungen, bei dem die Performance des Reifens sowohl auf eisigen Fahrbahnen als auch auf trockenen Fahrbahnen verbessert sein soll. Der Reifen weist ein Blockprofil auf, dessen Profilblöcke in Draufsicht jeweils mit einer Vielzahl von schmalen, parallel zueinander und in Querrichtung des Laufstreifens verlaufenden Einschnitten versehen sind. Es sind Einschnitte vorgesehen, die an ihren einander gegenüberliegenden Einschnittwänden miteinander zusammenwirkende Vorsprünge und Vertiefungen aufweisen. Ein Reifen mit einem sehr ähnlich ausgeführten Laufstreifen ist aus der JP 2002 187412 A bekannt. Die Vorsprünge bzw. Vertiefungen in den Einschnittwänden sind im Wesentlichen als Kugelabschnitte ausgeführt.

Einschnitte mit Einschnittwänden mit Erhebungen und Vertiefungen werden üblicherweise als 3D-Einschnitte (dreidimensionale Einschnitte) bezeichnet und sind in einer Vielzahl von Ausführungen bekannt. Die Erhebungen und Vertiefungen sind meist über einen Der aus der WO 2010/132052 A1 bekannte Fahrzeugluftreifen weist Einschnitte im Laufstreifen auf, die in Erstreckungsrichtung der Einschnitte gewellt sind. Zusätzlich sind auf den Einschnittwänden der Wellung folgend Vorsprünge ausgebildet.

Ein weiterer Fahrzeugluftreifen ist aus der EP-A-0 945 248 bekannt. Der Laufstreifen dieses Reifens ist mit Einschnitten versehen, deren eine Einschnittwand eine Vielzahl von aneinander unmittelbar anschließenden pyramidenförmigen Erhebungen aufweist, die dieser gegenüberliegende Einschnittwand weist gegengleich ausgebildete Vertiefungen auf. Die Lamellenbleche zur Herstellung derart ausgeführter Einschnitte sollen auch bei höheren Radialkräften im Verhältnis zur Lamellenblechdicke knickstabil aufgeführt werden können. Dies ermöglicht eine geringere Wandstärke der Lamellenbleche mit dem Effekt auf die Reifeneigenschaften, dass schon bei besonders geringer Blockverbiegung die den Einschnitt begrenzenden Einschnittwände miteinander in Kontakt kommen und den gewünschten Formschluss erzeugen. Dadurch sollen die Reifen ein gutes Trocken-Handling aufweisen. Aus der JP 10 080923 A ist ein Fahrzeugluftreifen mit einem Laufstreifen mit einem Blockprofil bekannt. Die Profilblöcke sind jeweils mit einer Anzahl von in axialer Richtung verlaufenden, schmalen Einschnitten versehen, deren einander gegenüberliegende Einschnittwände miteinander korrespondierende Vorsprünge und Vertiefungen aufweisen. In radialer Richtung betrachtet ist in jeder Einschnittwand jeweils eine Anzahl von paarweise angeordneten Vertiefungen und Vorsprüngen vorgesehen, derart, dass jeweils eine Vertiefung radial außerhalb eines Vorsprunges oder ein Vorsprung radial außerhalb einer Vertiefung angeordnet ist. Durch diese Ausgestaltung sollen die Performance des Reifens auf Eis und Schnee verbessert und unregelmäßiger Abrieb verhindert werden. Aus der US 2007/0295434 A1 ist ein Fahrzeugreifen mit einem Laufstreifen mit Schulterblockreihen bekannt, wobei in jedem Schulterblock, in Draufsicht betrachtet, zwei einander kreuzende Einschnitte ausgebildet sind, von welchen der eine im Wesentlichen in Umfangsrichtung und der andere in Querrichtung verläuft. Beide Einschnitte besitzen an den einander gegenüberliegenden Einschnittwänden miteinander korrespondierende Vorsprünge oder Vertiefungen. Durch diese Maßnahme soll die Steifigkeit der Profilblöcke derart beeinflusst werden, dass die Bremseigenschaften und die Performance des Reifens auf nassen Fahrbahnen gleichermaßen verbessert werden. Die WO 2008/065947 A1 offenbart einen Fahrzeugluftreifen für den Einsatz unter winterlichen Fahrbedingungen, bei dem die Performance des Reifens sowohl auf eisigen Fahrbahnen als auch auf trockenen Fahrbahnen verbessert sein soll. Der Reifen weist ein Blockprofil auf, dessen Profilblöcke in Draufsicht jeweils mit einer Vielzahl von schmalen, parallel zueinander und in Querrichtung des Laufstreifens verlaufenden Einschnitten versehen sind. Es sind Einschnitte vorgesehen, die an ihren einander gegenüberliegenden Einschnittwänden miteinander zusammenwirkende Vorsprünge und Vertiefungen aufweisen. Ein Reifen mit einem sehr ähnlich ausgeführten Laufstreifen ist aus der JP 2002 187412 A bekannt. Die Vorsprünge bzw. Vertiefungen in den Einschnittwänden sind im Wesentlichen als Kugelabschnitte ausgeführt.

Einschnitte mit Einschnittwänden mit Erhebungen und Vertiefungen werden üblicherweise als 3D-Einschnitte (dreidimensionale Einschnitte) bezeichnet und sind in einer Vielzahl von Ausführungen bekannt. Die Erhebungen und Vertiefungen sind meist über einen Großteil der Einschnittwände ausgebildet und gleichartig sowie gleichdimensional ausgeführt. Zur Beeinflussung der Steifigkeit der Profilblöcke wird die Einschnitttiefe durch das Vorsehen von Grundanhebungen variiert. Bei neuem bzw. wenig abgefahrenem Laufstreifen zeigt sich über die Breite der Profilpositive bzw. Profilblöcke meist ein ungleichmäßiger Abrieb, da die bekannten 3D-Einschnitte, insbesondere bei neuem Reifen, Querkräften nur geringen Widerstand bieten.

Der Erfindung liegt die Aufgabe zugrunde, bei einem Reifen der eingangs genannten Art durch eine besondere Ausführung der 3D-Einschnitte die Steifigkeit der Profilpositive derart zu beeinflussen, dass bei fortschreitendem Abrieb die Profilpositive zunächst Seitenkräfte gut aufnehmen und später Umfangskräfte optimal verteilen können, um einen gleichmäßigen Abrieb zu gewährleisteten.

Gelöst wird die gestellte Aufgabe erfindungsgemäß dadurch, dass die Vorsprünge insgesamt gerundet ausgeführte Erhebungen sind, welche jeweils von unstrukturiert verbleibenden Wandbereichen umgeben sind, wobei im radial äußeren Bereich der einen Einschnittwand an einzelnen Stellen Vorsprünge angeordnet sind, die jeweils eine einzige abgeflachte, in radialer Richtung und im Wesentlichen senkrecht zur Einschnittwand orientierte Seite aufweisen, welche eine Stützfläche bildet, und wobei im radial inneren Bereich der Einschnittwand an einzelnen Stellen Vorsprünge angeordnet sind, welche eine im Wesentlichen parallel zur Profilpositivoberfläche orientierte abgeflachte Seite aufweisen, welche eine Stützfläche bildet.

Die abgeflachten Seiten an den im radial äußeren Bereich der Einschnittwände angeordneten Vorsprüngen und Vertiefungen sind in der Lage, sich bei in Querrichtung wirkenden Kräften aufeinander abzustützen und begrenzen dadurch die gegenseitige Beweglichkeit der Profilpositivelemente. Bei fortschreitendem Abrieb bewirken die im radial inneren Bereich vorgesehenen Vorsprünge vorrangig eine Begrenzung der Beweglichkeit der Profilpositivelemente in den beiden Umfangsrichtungen. Dadurch bleibt auch in diesem Stadium der "Lebenszeit" des Reifens der Abrieb der Profilpositive gleichmäßig.

Das Ausmaß der Versteifung der einzelnen Profilpositive in Laufstreifenquerrichtung kann auf die Profilausgestaltung und die jeweilige Position der Profilpositive im Laufstreifen abgestimmt werden. So kann etwa vorgesehen sein, dass die abgeflachten Seiten der im radial äußeren Bereich der Einschnittwände vorgesehenen Vorsprünge überwiegend oder sämtlich an den gleichen Seiten der Vorsprünge angeordnet sind. Diese Maßnahme bewirkt einen hohen Widerstand gegen Querkräfte aus einer bestimmten Richtung.

Besonders vorteilhaft ist diese Maßnahme bei Laufstreifen, welche, auf das Fahrzeug bezogen, einen Außenbereich und einen Innenbereich aufweisen, wobei die abgeflachten Seiten der im radial äußeren Bereich der Einschnittwände von Einschnitten in Profilpositiven vorgesehenen Vorsprünge überwiegend oder sämtlich dem Außenbereich zugewandt sind. Die dadurch erzielbare höhere Quersteifigkeit an der Profilaußenseite ist vor allem für das Fahrverhalten des Reifens im Grenzbereich, etwa beim Kurvenfahren unter hoher Geschwindigkeit, von Vorteil.

Bei Laufstreifen ohne definierten Außen- und Innenbereich ist auf Ausgewogenheit zu achten, sodass es günstig ist, die abgeflachten Seiten der im radial äußeren Bereich der Einschnittwände von Einschnitten in Profilpositiven vorgesehenen Vorsprünge überwiegend oder sämtlich jeweils dem näher befindlichen Laufstreifenrand zugewandt sind. Alternativ können die abgeflachten Seiten der im radial äußeren Bereich der Einschnittwände vorgesehenen Vorsprünge von Vorsprung zu Vorsprung abwechselnd an der einen und an der anderen Seite der Vorsprünge angeordnet sein.

Um die Versteifung der Profilpositive in Quer- und in Umfangsrichtung optimal einzustellen, sind gewisse Abmessungen der Vorsprünge von Bedeutung. Die Vorsprünge im radial äußeren Bereich der Einschnittwände sollten in axialer Richtung eine maximale Länge von 1,5mm bis 3,5mm und in radialer Richtung eine maximale Breite von 1mm bis 3mm aufweisen, insbesondere entspricht die Breite höchsten der maximalen Länge. Die Vorsprünge im radial inneren Bereich der Einschnittwände sollten in axialer Richtung eine maximale Länge von 3mm bis 7mm und in radialer Richtung eine maximale Breite von 1mm bis 3mm aufweisen. Des weiteren sollten die Vorsprünge um 0,7 mm bis 2,5mm von der jeweiligen Einschnittwand abragen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Ansicht von Profilblöcken eines Laufstreifens eines Fahrzeugluftreifens,
Fig. 2 eine Ansicht einer Einschnittwand bei einem entlang der Linie II-II aufgeschnittenen Profilblock und
Fig. 3 eine Schnittdarstellung entlang Linie III-III der Fig. 2.

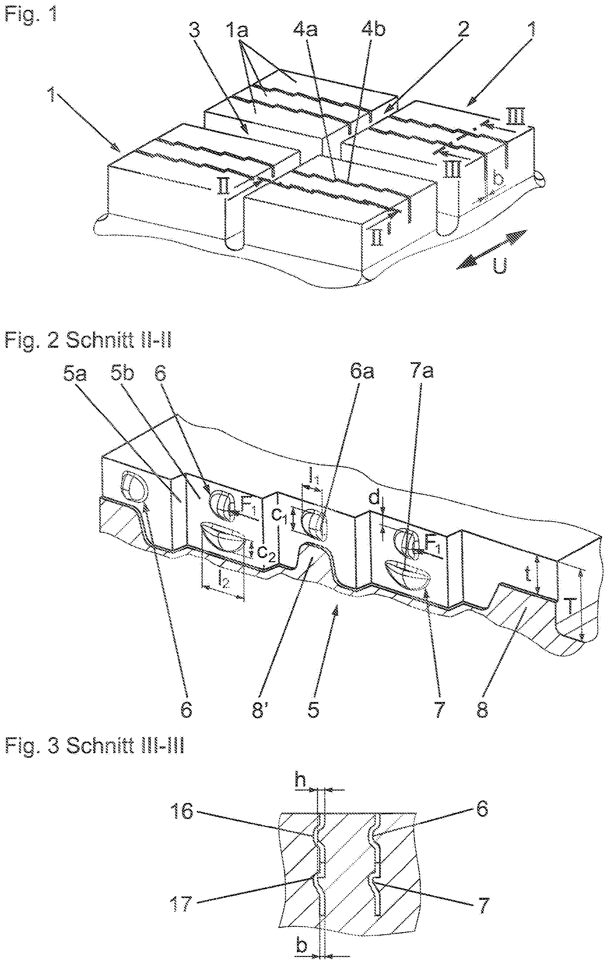

Fig. 1 zeigt beispielhaft Profilblöcke 1 eines Laufstreifens eines Fahrzeugluftreifens, insbesondere eines für den Einsatz unter winterlichen Fahrbedingungen geeigneten Reifens für Personenkraftwagen. Die vier schematisch dargestellten Profilblöcke 1 gehören jeweils zu einer in Umfangsrichtung, welche durch den Doppelpfeil U angedeutet ist, verlaufenden Blockreihe, wobei die beiden Blockreihen durch eine Umfangsnut 2 voneinander getrennt und jeweils von weiteren Umfangsnuten 2 begrenzt sind. Die innerhalb einer Blockreihe verlaufenden Profilblöcke 1 sind voneinander durch Quernuten 3 getrennt. Jeder Profiblock 1 ist mit einer Anzahl von Einschnitten 4 versehen, welche eine vorzugsweise konstante Breite b aufweisen, die zwischen 0,4mm und 0,6mm beträgt. Bei der dargestellten Ausführungsform sind pro Profilblock 1 zwei Einschnitte 4 vorgesehen, welche sich jeweils parallel zueinander und zu den Quernuten 3 erstrecken und deren gegenseitiger Abstand und deren Abstände zu den Quernuten 3 im Wesentlichen gleich groß sein können. Die Einschnitte 4 gliedern die Profilblöcke 1 in Profilblockelemente 1a und weisen in Draufsicht einen zick-zack- bzw. treppenförmigen Verlauf mit einer abwechselnden Aufeinanderfolge von jeweils einem kurzen Einschnittabschnitt 4a und einem langen Einschnittabschnitt 4b auf.

Fig. 2 zeigt einen entlang eines Einschnittes 4 geöffneten bzw. aufgeschnittenen Profilblock 1 und daher eine Ansicht der einen, den Einschnitt 4 begrenzenden Einschnittwand 5. Die zweite, der Einschnittwand 5 gegenüberliegenden Einschnittwand 5 befindet sich im unbelasteten Zustand des Laufstreifens bzw. des betreffenden Profilblocks 1 im Abstand b von der gezeigten Einschnittwand 5 und ist als Negativ der dargestellten Einschnittwand 5 ausgeführt, wie es Fig. 3 zeigt. Die in Fig. 2 gezeigte Einschnittwand 5 besteht aus mit den Einschnittabschnitten 4a und 4b korrespondierenden Einschnittwandflächen 5a und 5b. Die Wandflächen 5a sind langgestreckte Rechtecke, deren längere Seiten in radialer Richtung orientiert sind und bis auf die maximale Einschnitttiefe T reichen, welche der Profiltiefe entspricht und 7mm bis 8mm beträgt. Die Einschnittwandflächen 5b sind ebenfalls ebene, in radialer Richtung verlaufende Flächen. Bei der gezeigten Ausführungsform weist die Einschnittwand 5 fünf Wandflächen 5b auf, von welchen die zwei äußeren jeweils unmittelbar an eine Umfangsnut 2 angrenzen. Grundanhebungen 8 verringern die Tiefe der Endabschnitte der beiden äußeren Einschnittabschnitte 4b und sind in Fig. 2 als durchgeschnittene
Laufstreifengummibereiche eingezeichnet. Die Grundabhebungen 8 verringern die Tiefe bzw. die radiale Erstreckung der Endabschnitte dieser beiden Einschnittabschnitte 4b auf eine Tiefe t, welche zwischen 20% und 70% von T beträgt.

Die in der Profilblockmitte verlaufende Einschnittwandfläche 5b ist durch eine lokale Grundanhebung 8' verkleinert, welche ein etwa trapezförmiger "Ausschnitt" der Einschnittwandfläche 5b ist und in diesem Bereich eine Reduktion der Tiefe des Einschnittes 4 auf eine Tiefe t' bewirkt, die analog zu t zwischen 20 und 70% der Tiefe T betragen kann, wobei die Tiefen t, t' in sämtlichen Grundanhebungen unterschiedlich sein können.

Die zwischen den äußeren und der mittleren Wandflächen 5b befindlichen zwei weiteren Wandflächen 5b reichen bis auf die Tiefe T und sind rechteckige Flächen, welche jeweils mit einem Vorsprung 6 und einem Vorsprung 7 versehen sind. Die eine der beiden äußeren Einschnittwandflächen 5b weist bei der gezeigten Ausführungsform keinen Vorsprung auf, die andere äußere Einschnittwandfläche 5b ist mit einem Vorsprung 6 versehen. Die Vorsprünge 6 sind gerundete Erhebungen, deren axiale Erstreckung vorzugsweise größer ist als ihre radiale Erstreckung. Die größte Länge l₁ der Vorsprünge 6 in axialer Richtung beträgt zwischen 1,5mm bis 3,5mm ihre größte Breite c₁ in radialer Richtung beträgt 1mm bis 3mm und ist insbesondere kleiner oder gleich l₁. Die Vorsprünge 6 ragen um das Ausmaß h (Fig. 3) von der Einschnittwandfläche 5b ab, wobei h zwischen 0,7 mm und 2,5mm beträgt. Die Vorsprünge 6 sind ferner an einer Seite abgeflacht, wodurch eine Stützfläche 6a gebildet wird, welche in radialer Richtung bzw. im Wesentlichen in radialer Richtung sowie senkrecht bzw. im Wesentlichen senkrecht zur Einschnittwandfläche 5b verläuft. Sämtliche Vorsprünge 6 befinden sich etwa mittig in der oberen Hälfte der Einschnittwandflächen 5b und in einem Mindestabstand d von 2mm von der Oberfläche des Profilblockes 1. In Einschnittbereichen mit Grundabhebungen 8, 8' ist die Positionierung der Vorsprünge 6 analog.

Gemäß einer bevorzugten Ausführungsform der Erfindung befinden sich die Stützflächen 6a der Mehrheit der in einem Einschnitt 4 vorgesehenen Vorsprünge 6 jeweils an der gleichen Vorsprungseite. Bei der in Fig. 2 gezeigten Ausführungsform ist die Position der Stützflächen 6a bei drei Vorsprüngen 6 übereinstimmend, der an der einen äußeren Einschnittwandfläche 5b vorgesehene Vorsprung 6 weist eine Stützfläche 6a auf, welche an der anderen Seite des Vorsprunges 6 ausgebildet ist.

An den beiden bis auf die Tiefe T reichenden Einschnittwandflächen 5b befindet sich radial innerhalb jedes Vorsprunges 6, jeweils in der zweiten Hälfte der Einschnittwandfläche 5b, je ein weiterer Vorsprung 7. Die Vorsprünge 7 sind gerundete Erhebungen in Halbschalenform, die Schalenrundung weist zum Einschnittgrund. Die der Laufstreifenaußenseite zugewandte Seite der Vorsprünge 7 ist abgeflacht und derart mit einer in axialer Richtung langgestreckten Stützfläche 7a versehen, welche etwa halbovalförmig im Wesentlichen parallel zur Profilblockoberfläche verläuft. Die maximale Länge l₂ der Vorsprünge 7 in axialer Richtung ist größer als die Länge l₁ der Vorsprünge 6 und beträgt zwischen 3mm und 7mm. Die maximale radiale Erstreckung c₂ der Vorsprünge 7 beträgt zwischen 1mm und 3mm. Die Vorsprünge 7 springen um das Ausmaß h, wie bereits beschrieben, von der Einschnittwandfläche 5b vor.

Wie insbesondere Fig. 3 in Verbindung mit Fig. 2 zeigt, ist die der in Fig. 2 gezeigten Einschnittwand 5 gegenüberliegende Einschnittwand 5 mit Einschnittwandflächen 5b versehen, welche mit den Vorsprüngen 6 korrespondierende lokale Vertiefungen 16, 17 aufweist. Die Vertiefungen 16 und 17 sind - bedingt durch die Einschnittbreite b - etwas größer dimensioniert als die Vorsprünge 6, 7.

Die Einschnitte 4 werden während der Vulkanisation des Rohreifens in einer Vulkanisationsform ausgebildet. In den den Laufstreifen formenden Formsegmenten sind Lamellenbleche verankert, welche derart geprägt sind, dass sie auf der einen Seite Vertiefungen aufweisen, welche auf der anderen Seite des Bleches Vorsprünge bilden. Die Vertiefungen in den Lamellenblechen bilden bei Vulkanisation des Fahrzeugluftreifens die Vorsprünge 6, 7 in den einen Einschnittwänden, die Vorsprünge an den Lamellenblechen bilden die Vertiefungen 16, 17 in den gegenüberliegenden Einschnittwänden aus.

Die Vorsprünge 6 und die Vertiefungen 16 erhöhen die Quersteifigkeit des Profilblocks 1 vor allem in einer bestimmten Querrichtung, indem sich die Stützflächen 6b der Vorsprünge 6 auf den nicht gezeigten, jedoch ebenfalls vorhandenen Stützflächen der Vertiefungen 16, in welche die Vorsprünge 6 hineinragen, abstützen, wie es in Fig. 2 durch die Pfeile F₁ angedeutet ist. Bei Reifen mit einem asymmetrischen Laufstreifen, welcher, bezogen auf das Fahrzeug, eine definierte, der Fahrzeugaußenseite zugehörige Laufstreifenaußenseite und eine definierte, der Fahrzeugmitte zugewandte Laufstreifeninnenseite aufweisen, soll die überwiegende Anzahl der abgeflachten Seiten, insbesondere sollen sämtliche abgeflachte Seiten, der Vorsprünge 6 in den Einschnitten 4 sämtlicher Profilpositive der Laufstreifenaußenseite zugewandt sein. Bei Reifen mit symmetrischen Laufstreifen, die in beliebiger Position am Fahrzeug montiert werden können, soll die überwiegende Anzahl der Vorsprünge 6 bzw. sollen sämtliche Vorsprünge 6 derart angeordnet sein, dass die abgeflachten Seiten dem jeweils näher befindlichen Laufstreifenrand zugewandt sind. Alternativ ist es möglich, die abgeflachten Seiten der im radial äußeren Bereich der Einschnittwände 5 vorgesehenen Vorsprünge 6 von Vorsprung 6 zu Vorsprung 6 abwechselnd an der einen und an der anderen Seite der Vorsprünge 6 anzuordnen.

Im radial inneren Bereich der Einschnitte 4 ist es von Vorteil, bei fortgeschrittenem Abrieb die Umfangssteifigkeit der Profilpositive zu erhöhen, um einen gleichmäßigen Abrieb der Profilpositive sicherzustellen. Dies wird durch die gegenseitige Abstützung der Vorsprünge 7 in den Vertiefungen 17 erreicht.

Die Erfindung ist auf das dargestellte Ausführungsbeispiel nicht eingeschränkt. Anstelle von in Draufsicht treppenförmig verlaufenden Einschnitten können auch gerade oder wellenförmig verlaufende Einschnitte vorgesehen sein, deren Einschnittwände gemäß der Erfindung mit Vorsprüngen 6, 7 und korrespondierenden Vertiefungen versehen werden. Erfindungsgemäß ausgeführte Einschnitte können ferner lediglich mit einem ihrer Endabschnitte in eine Nut einmünden, beispielsweise bei einer Anordnung der Einschnitte in schulterseitig vorgesehenen Profilpositiven. Die Ausgestaltung des Laufstreifensprofils kann beliebig sein, so können beispielsweise erfindungsgemäß ausgeführte Einschnitte auch in Laufstreifenbändern vorgesehen werden. Die Gestalt der Vorsprünge kann von den gezeigten und beschriebenen Ausführungen abweichen.

### Bezugszeichenliste

- 1: Profilblock
- 1a: Profilblockelemente
- 2: Umfangsnut
- 3: Quernut
- 4: Einschnitt
- 4a: Einschnittabschnitt
- 4b: Einschnittabschnitt
- 5: Einschnittwand
- 5a: Einschnittwandfläche
- 5b: Einschnittwandfläche
- 6: Vorsprung
- 6a: Stützfläche
- 7: Vorsprung
- 7a: Stützfläche
- 8: Grundanhebung
- 8': Grundanhebung
- 16: Vertiefung
- 17: Vertiefung
- l₁: Länge
- l₂: Länge
- h: Höhe
- d: Abstand
- b: Breite
- c₁: Breite
- C₂: Breite

## Patentansprüche

1. Fahrzeugluftreifen, insbesondere für den Einsatz unter winterlichen Fahrbedingungen, mit einem Laufstreifen mit durch in Umfangsrichtung umlaufende Nuten (2), durch Quernuten (3) und dergleichen voneinander getrennten Profilpositiven (1), beispielsweise Profilblöcken oder Laufstreifenbändern, welche jeweils mit einer Vielzahl von zumindest im Wesentlichen parallel zueinander und zumindest im Wesentlichen in Laufstreifenquerrichtung verlaufenden Einschnitten (4) geringer Breite versehen sind, deren einander gegenüberliegende Einschnittwände (5) miteinander korrespondierende Vorsprünge (6, 7) und Vertiefungen (16, 17) aufweisen mit abgeflachten in radialer Richtung und im Wesentlichen senkrecht zur Einschnittwand (5) orientierten Seiten und mit abgeflachten im Wesentlichen parallel zur Profilpositivoberfläche orientierten Seiten,
**dadurch gekennzeichnet,**
**dass** die Vorsprünge (6, 7) insgesamt gerundet ausgeführte Erhebungen sind, welche jeweils von unstrukturiert verbleibenden Wandbereichen umgeben sind, wobei im radial äußeren Bereich der einen Einschnittwand (5) an einzelnen Stellen Vorsprünge (6) angeordnet sind, die jeweils eine einzige abgeflachte, in radialer Richtung und im Wesentlichen senkrecht zur Einschnittwand (5) orientierte Seite aufweisen, welche eine Stützfläche (6a) bildet, und wobei im radial inneren Bereich der Einschnittwand (5) an einzelnen Stellen Vorsprünge (7) angeordnet sind, welche eine im Wesentlichen parallel zur Profilpositivoberfläche orientierte abgeflachte Seite aufweisen, welche eine Stützfläche (7a) bildet.

2. Fahrzeugluftreifen nach Anspruch 1, **dadurch gekennzeichnet, dass** die abgeflachten Seiten der im radial äußeren Bereich der Einschnittwände (5) vorgesehenen Vorsprünge (6) überwiegend oder sämtlich an den gleichen Seiten der Vorsprünge (6) angeordnet sind.

3. Fahrzeugluftreifen nach Anspruch 1, **dadurch gekennzeichnet, dass** die abgeflachten Seiten der im radial äußeren Bereich der Einschnittwände (5) vorgesehenen Vorsprünge (6) von Vorsprung (6) zu Vorsprung (6) abwechselnd an der einen und an der anderen Seite der Vorsprünge (6) angeordnet sind.

4. Fahrzeugluftreifen nach Anspruch 1 oder 2, mit einem Laufstreifen, welcher, auf das Fahrzeug bezogen, einen Außenbereich und einen Innenbereich aufweist, **dadurch gekennzeichnet, dass** die abgeflachten Seiten der im radial äußeren Bereich der Einschnittwände (5) von Einschnitten (4) in Profilpositiven (1) vorgesehenen Vorsprünge (6) überwiegend oder sämtlich dem Außenbereich zugewandt sind.

5. Fahrzeugluftreifen nach Anspruch 1 oder 2, mit einem Laufstreifen ohne definierten Außen- und Innenbereich, **dadurch gekennzeichnet, dass** die abgeflachten Seiten der im radial äußeren Bereich der Einschnittwände (5) von Einschnitten (4) in Profilpositiven (1) vorgesehenen Vorsprünge (6) überwiegend oder sämtlich jeweils dem näher befindlichen Laufstreifenrand zugewandt sind.

6. Fahrzeugluftreifen nach einem der Ansprüche 1 bis 5, **dadurch gekennzeichnet, dass** die Vorsprünge (6) im radial äußeren Bereich der Einschnittwände (5) in axialer Richtung eine maximale Länge (l₁) von 1,5mm bis 3,5mm und in radialer Richtung eine maximale Breite (c₁) von 1mm bis 3mm aufweisen, insbesondere entspricht die Breite höchsten der maximalen Länge (l₁).

7. Fahrzeugluftreifen nach einem der Ansprüche 1 bis 6, **dadurch gekennzeichnet, dass** die Vorsprünge (7) im radial inneren Bereich der Einschnittwände (5) in axialer Richtung eine maximale Länge (l₂) von 3mm bis 7mm und in radialer Richtung eine maximale Breite (c₂) von 1mm bis 3mm aufweisen.

8. Fahrzeugluftreifen nach einem der Ansprüche 1 bis 7, **dadurch gekennzeichnet, dass** die Vorsprünge (6, 7) jeweils paarweise übereinander und an Einschnittwänden (5) mit größerer Tiefe ausgebildet sind.

9. Fahrzeugluftreifen nach einem der Ansprüche 1 bis 8, **dadurch gekennzeichnet, dass** die Vorsprünge (6, 7) um 0,7 mm bis 2,5mm von der Einschnittwand (5) abragen.

10. Fahrzeugluftreifen nach einem der Ansprüche 1 bis 9, **dadurch gekennzeichnet, dass** die Vorsprünge (6) im radial äußeren Bereich der Einschnittwände einen Mindestabstand (d) von 2mm zur Profiloberfläche aufweisen.

## Claims

1. Pneumatic vehicle tyre, in particular for use in winter driving conditions, comprising a tread having positive profiles (1), for example profile blocks or tread strips, which are separated from one another by grooves (2) running around in the circumferential direction, by transverse grooves (3) and the like, which positive profiles are each provided with a multiplicity of narrow sipes (4), which extend at least substantially parallel to one another and at least substantially in the transverse direction of the tread and the mutually opposite sipe walls (5) of which have projections (6, 7) and depressions (16, 17) that correspond to one another, having flattened sides oriented in the radial direction and substantially perpendicular to the sipe wall (5) and having flattened sides oriented substantially parallel to the upper surface of the positive profile, **characterized in that**, overall, the projections (6, 7) are rounded raised areas, which are each surrounded by wall regions which remain unstructured, wherein projections (6) are arranged at individual locations in the radially outer region of one sipe wall (5), each of said projections (6) having a single flattened side, oriented in the radial direction and substantially perpendicular to the sipe wall (5), forming a support surface (6a), and wherein projections (7) are arranged at individual locations in the radially inner region of the sipe wall (5), each of said projections (7) having a flattened side, oriented substantially parallel to the upper surface of the positive profile, forming a support surface (7a).

2. Pneumatic vehicle tyre according to Claim 1, **characterized in that** the majority of the flattened sides or all of the flattened sides of the projections (6) provided in the radially outer region of the sipe walls (5) are arranged on the same sides of the projections (6).

3. Pneumatic vehicle tyre according to Claim 1, **characterized in that** the flattened sides of the projections (6) provided in the radially outer region of the sipe walls (5) are arranged alternately on one side and on the other side of the projections (6) from projection (6) to projection (6) .

4. Pneumatic vehicle tyre according to Claim 1 or 2, having a tread which, in relation to the vehicle, has an outer region and an inner region, **characterized in that** the majority of the flattened sides or all the flattened sides of the projections (6) provided in the radially outer region of the sipe walls (5) of sipes (4) in positive profiles (1) face the outer region.

5. Pneumatic vehicle tyre according to Claim 1 or 2, having a tread without a defined outer and inner region, **characterized in that** the majority of the flattened sides or all the flattened sides of the projections (6) provided in the radially outer region of the sipe walls (5) of sipes (4) in positive profiles (1) each face the closer edge of the tread.

6. Pneumatic vehicle tyre according to one of Claims 1 to 5, **characterized in that** the projections (6) in the radially outer region of the sipe walls (5) have a maximum length (l₁) of 1.5 mm to 3.5 mm in the axial direction and a maximum width (c₁) of 1 mm to 3 mm in the radial direction, and, in particular, the width corresponds at most to the maximum length (l₁).

7. Pneumatic vehicle tyre according to one of Claims 1 to 6, **characterized in that** the projections (7) in the radially inner region of the sipe walls (5) have a maximum length (l₂) of 3 mm to 7 mm in the axial direction and a maximum width (c₂) of 1 mm to 3 mm in the radial direction.

8. Pneumatic vehicle tyre according to one of Claims 1 to 7, **characterized in that** the projections (6, 7) are formed one above the other in respective pairs and on sipe walls (5) of greater depth.

9. Pneumatic vehicle tyre according to one of Claims 1 to 8, **characterized in that** the projections (6, 7) project from the sipe wall (5) by 0.7 mm to 2.5 mm.

10. Pneumatic vehicle tyre according to one of Claims 1 to 9, **characterized in that** the projections (6) in the radially outer region of the sipe walls have a minimum spacing (d) of 2 mm from the upper surface of the profile.

## Revendications

1. Pneumatique de véhicule, en particulier pour une utilisation dans des conditions de circulation hivernales, avec une bande de roulement présentant des profils positifs (1) séparés les uns des autres par des rainures s'étendant en direction périphérique (2), par des rainures transversales (3) et similaires, par exemple des blocs profilés ou des bandes de la bande de roulement, qui sont respectivement dotés d'une multiplicité d'entailles (4) de faible largeur s'étendant au moins essentiellement parallèlement l'une à l'autre et au moins essentiellement dans la direction transversale de la bande de roulement, dont les parois d'entaille (5) opposées l'une à l'autre présentent des protubérances (6, 7) et des creux (16, 17) se correspondant mutuellement avec des côtés aplatis orientés en direction radiale et essentiellement perpendiculairement à la paroi d'entaille (5) et avec des côtés aplatis orientés essentiellement parallèlement à la surface positive des profils,
**caractérisé en ce que**
les protubérances (6, 7) sont des saillies de forme globalement arrondie, qui sont entourées respectivement de zones de paroi restant non structurées, dans lequel des protubérances (6) sont disposées en des endroits isolés dans la région radialement extérieure d'une première paroi d'entaille (5), lesquelles présentent respectivement un seul côté aplati orienté en direction radiale et essentiellement perpendiculairement à la paroi d'entaille (5) et qui forme une face d'appui (6a), et dans lequel des protubérances (7) sont disposées en des endroits isolés dans la région radialement intérieure de la paroi d'entaille (5), lesquelles présentent un côté aplati orienté essentiellement parallèlement à la surface positive des profils et qui forme une face d'appui (7a).

2. Pneumatique de véhicule selon la revendication 1, **caractérisé en ce que** les côtés aplatis des protubérances (6) prévues dans la région radialement extérieure des parois d'entaille (5) sont disposés principalement ou entièrement sur les mêmes côtés des protubérances (6).

3. Pneumatique de véhicule selon la revendication 1, **caractérisé en ce que** les côtés aplatis des protubérances (6) prévues dans la région radialement extérieure des parois d'entaille (5) sont disposés en alternance d'une protubérance (6) à l'autre (6) sur l'un et sur l'autre côté des protubérances (6).

4. Pneumatique de véhicule selon la revendication 1 ou 2, avec une bande de roulement qui, par rapport au véhicule, présente une région extérieure et une région intérieure, **caractérisé en ce que** les côtés aplatis des protubérances (6) prévues dans la région radialement extérieure des parois d'entaille (5) d'entailles (4) dans les profils positifs (1) sont tournés principalement ou entièrement vers la région extérieure.

5. Pneumatique de véhicule selon la revendication 1 ou 2, avec une bande de roulement sans région extérieure et intérieure définie, **caractérisé en ce que** les côtés aplatis des protubérances (6) prévues dans la région radialement extérieure des parois d'entaille (5) d'entailles (4) dans les profils positifs (1) sont tournés principalement ou entièrement respectivement vers le bord de la bande de roulement se trouvant le plus près.

6. Pneumatique de véhicule selon l'une quelconque des revendications 1 à 5, **caractérisé en ce que** les protubérances (6) dans la région radialement extérieure des parois d'entaille (5) présentent en direction axiale une longueur maximale (l₁) de 1,5 mm à 3,5 mm et en direction radiale une largeur maximale (c₁) de 1 mm à 3 mm, en particulier la largeur correspond au plus à la longueur maximale (l₁).

7. Pneumatique de véhicule selon l'une quelconque des revendications 1 à 6, **caractérisé en ce que** les protubérances (7) dans la région radialement intérieure des parois d'entaille (5) présentent en direction axiale une longueur maximale (l₂) de 3 mm à 7 mm et en direction radiale une largeur maximale (c₂) de 1 mm à 3 mm.

8. Pneumatique de véhicule selon l'une quelconque des revendications 1 à 7, **caractérisé en ce que** les protubérances (6, 7) sont formées respectivement par paires l'une au-dessus de l'autre et sur des parois d'entaille (5) de plus grande profondeur.

9. Pneumatique de véhicule selon l'une quelconque des revendications 1 à 8, **caractérisé en ce que** les protubérances (6, .7) sont saillantes de 0,7 mm à 2,5 mm sur la paroi d'entaille (5).

10. Pneumatique de véhicule selon l'une quelconque des revendications 1 à 9, **caractérisé en ce que** les protubérances (6) dans la région radialement extérieure des parois d'entaille présentent une distance minimale (d) de 2 mm de la surface du profil.
